# EUROPEAN PATENT SPECIFICATION

(11) **EP 3 378 435 B1**
(45) Date of publication and mention of the grant of the patent: **16.06.2021**
(21) Application number: 18162825.6
(22) Date of filing: 20.03.2018
(51) Int. Cl.: A61C 13/15, A61C 19/00

(54) **METHOD AND APPARATUS FOR POLYMERIZING OR CROSS-LINKING A DENTAL COMPOSITION**
VERFAHREN UND VORRICHTUNG ZUR POLYMERISATION ODER VERNETZUNG EINER ZAHNMITTELZUSAMMENSETZUNG
PROCÉDÉ ET APPAREIL POUR POLYMERISER OU RÉTICULER UNE COMPOSITION DENTAIRE

(30) Priority: 20.03.2017 IT 201700030438
(43) Date of publication of application: 26.09.2018
(73) Proprietor: Effegi Brega S.r.L., 29010 Sarmato (PC) (IT)
(72) Inventor: Rebecchi, Piero, 29010 Sarmato (PC) (IT)
(74) Representative: Fisauli, Beatrice A. M.

(56) References cited:
- EP-A2- 0 806 240
- WO-A1-00/18191
- WO-A2-2012/036441
- DE-A1- 4 102 129
- US-A1- 2006 029 722

## Description

The present invention concerns a method for polymerizing or cross-linking a photosensitive material and more in particular a dental composition comprising said photosensitive material. More in detail, the invention relates to a method for producing dental prostheses or other similar parts produced with the aforesaid dental composition. The invention further concerns an apparatus for implementing the steps of the aforesaid method.

A prior art and currently very widely used method for producing dental prostheses employs dental compositions comprising a fluid curing material mixed with inorganic solid particles of very small size. The curing material is generally a photosensitive polymer that polymerizes or cross-links, according to its chemical nature, when exposed to light radiation.

According to this prior art method, the prosthesis is produced by first modeling the dental composition, to give it the desired shape, and subsequently curing the composition to stabilize the shape of the prosthesis. For the aforesaid curing step, hereinafter called polymerizing or cross-linking, apparatus equipped with light sources that emit waves with lengths in the ultraviolet or in the blue light range, which allow triggering or acceleration of the chemical reactions that cause curing of the photosensitive material within the composition, are generally employed.

An example of a prior art apparatus of this kind is described in EP 2545882 A1 and EP 0806240 A2.

In some cases, in theese apparatus, also called "polymerizers" or "photopolymerizers" in jargon, the prosthesis is housed in a sealed housing to enable a vacuum to be produced during the polymerizing/cross-linking step. In fact, with this system it is possible to reduce or eliminate the formation of the "dispersion layer" on the outer surface of the prosthesis, layer which otherwise would later require to be removed.

With the prior art methods illustrated above, it is possible especially when the prosthesis has a somewhat stubby shape or in any case considerable dimensions or depths, that small bubbles or air pockets, already included in the composition or created during the forming step and not completely eliminated during the polymerizing/cross-linking step, remain trapped inside.

These bubbles, besides creating surface porosity that changes the quality of the prosthesis, in some cases they can also reduce its strength.

WO 00/18191 A1 describes a method for polymerizing a dental composition in which the composition is polymerized with microwaves and simultaneously compacted by means of a flexible membrane. This document also describes an apparatus for polymerizing a dental composition that comprises a box container with an inner cavity and a microwave emitter. The dental composition to be polymerized is placed in a receptacle, which in turn is inserted in the aforesaid cavity. The receptacle is composed of two superimposable parts clamped to each other, of a perforated support surface, on which the dental composition is placed, and of a flexible membrane whose perimeter is clamped between the two parts of the container so as to define an upper chamber and a lower chamber. The lower chamber is connectable to a vacuum source to generate a vacuum pressure that collapses the membrane against the dental composition to maintain this latter in position in the mold during polymerization. Any further pressure is applied to the composition by introducing a pressurized gas into the upper chamber which exerts a thrust on the membrane and this in turn compresses the dental composition.

DE 4102129 A1 describes a method for polymerizing a dental composition in which said dental composition is inserted in a pressurized chamber and is polymerized with microwaves. The document also describes an apparatus comprising a container that defines a sealed chamber and a microwave generator. The container is provided with an inlet/outlet valve of the gas through which pressurized air or nitrogen can be introduced into the chamber.

In this context, the object of the present invention is to propose a method for polymerizing or cross-linking a dental composition that solves the problems of the prior art described above.

The object of the invention is therefore to provide a method that enables the production of a dental prosthesis with improved aesthetic characteristics and greater strength.

In particular, an object of the invention is to provide a method that allows the material of the dental composition to be compacted to eliminate or reduce the presence of small air bubbles.

A further object of the present invention is to propose a method that allows the production of a dental prosthesis less prone to the formation of dental plaque and, therefore, that maintains the aforesaid appearance for longer and that also improves the conditions of hygiene of the patient's oral cavity.

Another object of the present invention is to provide a method that enables a product with limited dimensional tolerances to be obtained.

A further object of the present invention is to provide an apparatus for producing a dental prosthesis or the like, of simple construction and with a cost comparable to the cost of prior art apparatus.

The aforesaid objects of the invention are achieved by an apparatus for polymerizing or cross-linking a dental composition that includes a photosensitive material, comprising:
- a chamber for housing a product produced with the aforesaid dental composition, said chamber being sealable with a cover;
- a light source housed in the chamber and configured to emit a light radiation with a wavelength comprised between 350 nm and 600 nm;
- a pneumatic circuit in fluid communication with the chamber, and optionally
- a compressor.

According to the invention, said pneumatic circuit is configured to apply a pressure or a vacuum pressure in the chamber. Therefore, the apparatus allows a pressure or a vacuum pressure to be applied in the chamber, according to need, in order to obtain the aforesaid benefits on the product to be treated.

According to the invention, the pneumatic circuit further comprises at least a pressure line and a vacuum line, both connectable to a compressed air source. Said source can be a fixed system, an external compressor or, if provided, a compressor mounted on the apparatus. The pressure line is thus configured to introduce pressurized air into the chamber. The vacuum line, instead, comprises a Venturi vacuum meter in communication with the chamber to create a vacuum pressure therein.

This configuration allows simplification of the apparatus as, for its operation, a compressed air source is sufficient also to produce the vacuum pressure in the chamber. Therefore, the apparatus does not require the use of vacuum pumps, external or mounted thereon.

According to the invention, said pneumatic circuit further comprises at least a valve on the pressure line and at least a valve on the vacuum line. The aforesaid valves are opened selectively to apply a pressure or a vacuum pressure in the chamber. According to a preferred variant, said valves are controllable electrically.

According to another aspect of the invention, the apparatus comprises heating means, typically resistors, adapted to heat the chamber. Said resistor means can be positioned inside or outside the chamber. In this latter case they heat the outer walls of the chamber.

According to another aspect of the invention, the apparatus is equipped with a control unit connected to the valves, to the light source and to the resistor means. Advantageously, said control unit can be configured to automatically perform an activation or deactivation sequence of the aforesaid components to implement the steps of the method described above.

These objects are also achieved with a method for polymerizing or cross-linking a dental composition that includes a photosensitive material, wherein at least a product produced with the aforesaid dental composition is placed in the sealed chamber of an apparatus according to embodiments described above.

More in detail, the method comprises:
- a step (a) consisting of subjecting a product (P) produced with the said dental composition to a pressure comprised between 1 bar and 6 bar, the outer surface of the product being subjected to the hydrostatic pressure exerted by a gaseous fluid that surrounds the product in the chamber (20); and
- a subsequent step (b) consisting of subjecting the product (P) to a vacuum pressure, said step being performed by taking the pressure inside the chamber (20) to a value of at least - 0.5 bar;
- a step (c) consisting of irradiating the product (P) with a light source (35), adapted to trigger or to promote polymerization/cross-linking of the photosensitive material within the dental composition;
wherein said step (c) follows said step (b).

In the step (a) the outer surface of the product is subjected to the hydrostatic pressure exerted by a fluid, more precisely a gas, that surrounds the product in the chamber. Said gas is typically air or another inert gas, such as nitrogen or the like. According to the invention, said further step (a) allows compaction of the composition with which the product, typically a dental prosthesis or the like, is produced with the effect of eliminating or reducing air inclusions in the composition. Moreover, the effect of the pressure on the outer surface of the product reduces the porosity of this surface improving both the appearance and the resistance to plaque adhesion.

According to an aspect of the invention, it would also be possible to maintain the overpressure during the irradiation step (c).

Preferably, the step (a) has a duration comprised between 20 seconds and 60 minutes and more preferably comprised between 5 minutes and 20 minutes.

According to an aspect of the invention, in the step (b) the product is maintained in vacuum pressure for a time preferably comprised between 30 seconds and 30 minutes and more preferably comprised between 1 minute and 5 minutes.

According to a preferred variant of the invention, this vacuum pressure can also be maintained during step (c) or optionally only during said step. Therefore, in this case the product is subjected to the vacuum pressure and exposed to the light radiation.

According to a variant of the invention, step (b) can also be carried out before step (a).

In fact, the action of the vacuum pressure before cross-linking and before applying pressure allows any bubbles present in the deepest layer of the material to be collapsed. Said initial vacuum pressure also allows the shape of the product to be stabilized, limiting the deformations that normally occur during the polymerizing or cross-linking step, reducing the tolerances of the finished product.

Therefore, according to the method of the invention, said step (b) can be carried out:
i) a first time before step (a) and a last time between step (a) and step (c); or
ii) a first time before step (a), a second time between step (a) and step (c) and finally simultaneously to step (C); or
iii) a first time before step (a) and a second time simultaneously to step (C).

Alternatively, as stated above, said step (b) can be carried out after step (a) and specifically:
I) a first time between step (a) and step (c) and subsequently simultaneously to step (C); or
II) only during step (C).

In an aspect of the invention, the method provides for heating the product at least before applying pressure. Preferably, the method provides for heating the product also in the subsequent steps of the process.

If vacuum pressure is applied before step (a), this heating can also take place before or during application of this vacuum pressure.

The temperature to which the product is heated is comprised between 45 °C and 65 °C and more preferably between 50 °C and 60 °C. This heating promotes application of the composite materials and in particular the reaction of some materials contained therein.

According to the invention, an example of method for polymerizing or cross-linking a dental composition comprises the following steps:
a) subjecting the product to a pressure comprised between 1 bar and 6 bar for a time comprised between 5 minutes and 20 minutes;
b) subjecting the product to a vacuum pressure comprised between -0.8 bar and -0.9 bar for a time comprised between 1 minute and 5 minutes;
c) maintaining the vacuum pressure, irradiating the product with a light radiation with a wavelength comprised between 350 nm and 540 nm for a time comprised between 5 seconds and 5 minutes.

Further characteristics and advantages of the present invention will become more apparent from the description of an example of a preferred, but not exclusive, embodiment of an apparatus for polymerizing or cross-linking a dental composition, as illustrated in the accompanying figures, wherein:

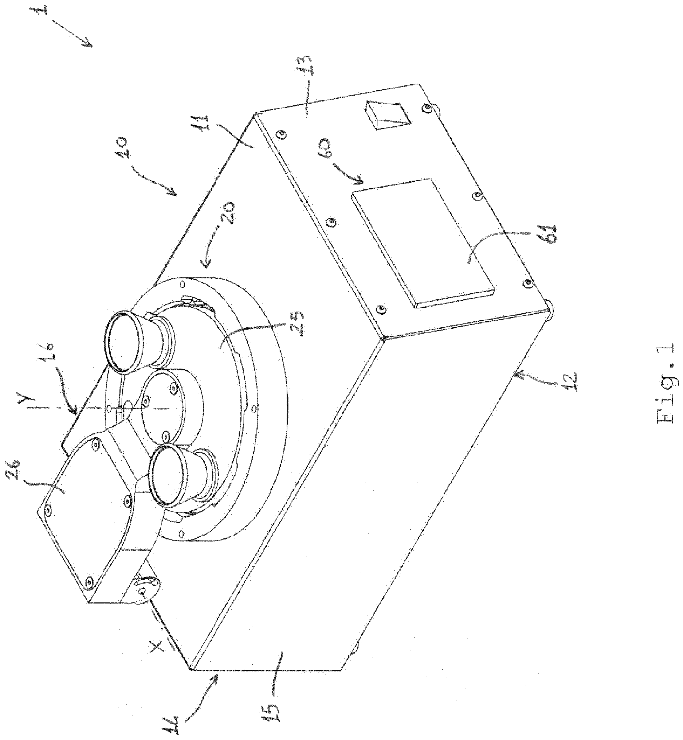

- Fig. 1 is a perspective view of an apparatus for polymerizing or cross-linking a dental composition, according to the invention;

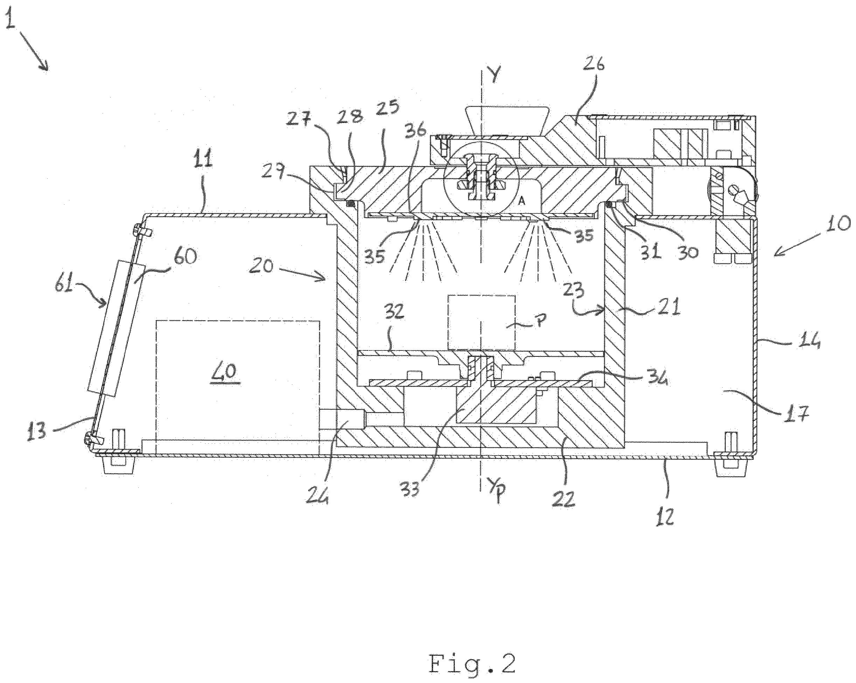

- Fig. 2 is a lateral sectional view of the apparatus of Fig. 1;
- Fig. 3 is a sectional view of a detail of the apparatus of Fig. 1;
- Fig. 4 is a partial sectional top view of the apparatus of Fig. 1;
- Fig. 5 is a schematic view of the pneumatic circuit of the apparatus of Fig. 1.

With reference to the accompanying figures, the apparatus, indicated as a whole with 1, comprises a casing 10 comprising an upper wall 11, a lower wall 12, a front wall 13, a back wall 14 and side walls 15, 16.

The casing 10 defines a housing 17 positioned inside which is a chamber 20 that can accommodate a product P to be treated, typically a dental prosthesis produced with a fluid or paste-like dental composition that must be cured.

According to the invention, the apparatus is suitable to treat dental prostheses such as "inlays", "onlays", aesthetic crowns, aesthetic coatings on metal, individual impression trays, occlusal splints, spacings on dies and any other part comprising a material that polymerizes or cross-links if exposed to light radiation.

These materials are typically photosensitive polymers for which the polymerizing/cross-linking reaction is triggered by radiations with wavelengths comprised between 350 nm and 550 nm. These materials are well known to those skilled in the art and will therefore be described in more detail.

According to the invention the chamber 20 is delimited by a bottom 22 and by a lateral wall 21. The chamber 20 is preferably cylindrical.

The inner surface 23 of the chamber 20 is preferably coated with a reflective material, typically a metalized film.

The chamber 20 is closed at the top with a moving cover 25. This latter is of a shape adapted to close the opening of the chamber 20, for example circular if the chamber is cylindrical. The cover 25 is connected to a support 26, in turn hinged to the casing 10 about an axis X, so as to allow lifting of the cover 25 and opening of the chamber 20.

Preferably, said cover 25 is rotatably connected to the support 26 so as to rotate about an axis Y. This connection allows the cover to be provided with bayonet type closing system. More in detail, the cover 25 has a lateral wall 27 provided with projecting profiles 28 adapted to be housed in seats 29 obtained in the lateral wall 21 of the chamber 20.

Therefore, the cover 25 has an open position, in which said projecting profiles 28 are free, and can thus be raised by rotating the support 26 about the axis X, and a closed position in which said cover 25 is rotated by a certain angle about the axis Y with respect to the support 26 to engage said projecting profiles 28 in the seats 29.

A gasket 31 is interposed between the cover 25 and an abutment surface 30 of the lateral wall 21 to seal the chamber 20 when the cover 25 is in the closed position.

A supporting plate 32, on which the product P to be treated can be positioned, is placed in proximity of the bottom 22 of the chamber.

The supporting plate 32 is preferably mounted in a manner rotatable about an axis Yp and is connected to a motor 33, preferably electric, which controls the aforesaid rotation.

The supporting plate 32 and the motor 33 are preferably mounted on a mounting plate 34 fixed to the bottom 22 of the chamber 20.

The upper surface of the supporting plate 32 is preferably reflective; typically said supporting plate 32 comprises a mirror.

According to the invention, the apparatus 10 is equipped with light sources to trigger, stimulate or accelerate the chemical process, precisely polymerizing or cross-linking, of the composition employed in the product P to be treated.

In a preferred variant, said light sources comprise a plurality of LEDs 35 arranged on the inner side of the cover 25 and oriented toward the chamber 20.

More in detail, the apparatus 10 comprises a circular array of LEDs arranged substantially coaxial with the cover 25. The LEDs 35 are preferably mounted on a supporting plate 36 fixed to the inner side of the cover 25.

The LEDs 35 emit a light with a wavelength preferably comprised between 350 nm and 600 nm and more preferably between 380 nm and 540 nm. This range of wavelengths is covered by several LEDs 35, each having its own specific wavelength. In the example illustrated the apparatus comprises 12 LEDs, each characterized by a different wavelength.

All the LEDs 35 can be switched on simultaneously or, if necessary, they can be switched on separately to generate a radiation with a more limited range of wavelengths.

Moreover, the power of the LEDs 35 is preferably adjustable. For this purpose, the supply current of the LEDs 35 varies between around 100 mA and 900 mA. A higher power can be employed to make the radiation penetrate deeper, for example if the products to be treated are of considerable thickness.

According to the invention, the apparatus 10 is also provided with a pneumatic circuit, indicated as a whole with 40, which allows pressurized air to be introduced into the chamber 20 or, on the contrary, to be removed to create a vacuum pressure therein.

The pneumatic circuit 40 is connected to the chamber 20 through an opening 24 obtained, preferably/typically, in proximity of the bottom 22 and provided with a coupling of known type.

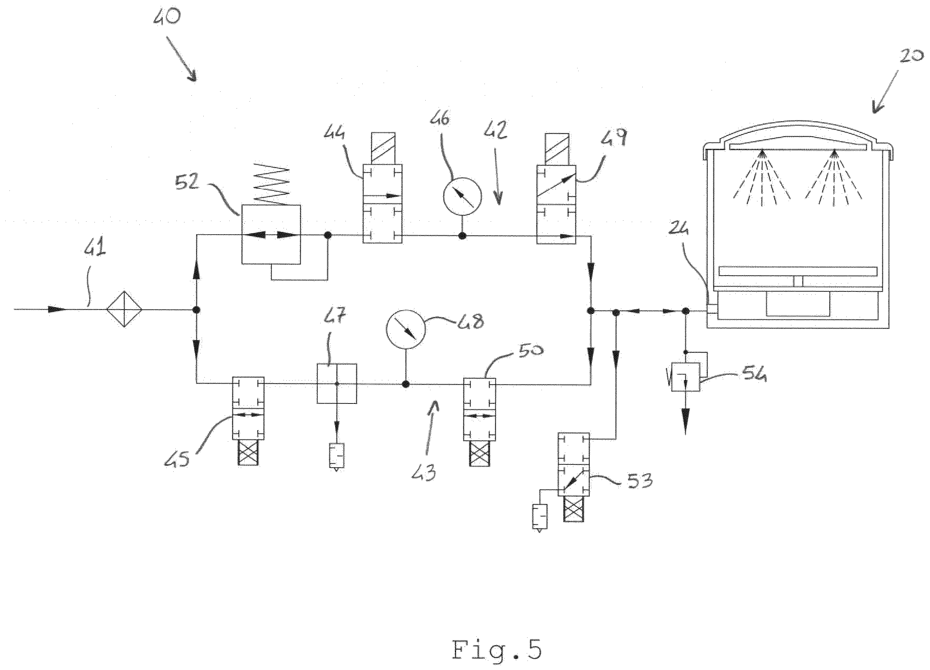

With reference to Fig. 5, the pneumatic circuit 40 comprises an inlet line 41 that supplies both a pressure line 42 and a vacuum line 43, both in communication with the opening 24 of the chamber 20.

The inlet line 41 is connectable to an external compressed air source or to a compressor mounted on the apparatus 10 (not illustrated in the figures).

According to an embodiment, the pressure line 41 comprises at least a first distributor valve 44, preferably two-way, that regulates the passage of the air flow toward the chamber 20. A pressure gauge 46 is placed downstream of the first valve 44.

The vacuum line 43, in turn, comprises a second distributor valve 45, preferably two-way, that regulates the passage of air toward a Venturi type vacuum gauge 47. The pressurized inlet of the vacuum gauge is therefore in communication with the second valve 45 while the suction inlet is in communication with the branch of the vacuum line 43 connected to the chamber 20. A vacuum pressure gauge 48 is connected to said vacuum line 43, downstream of the vacuum meter 47.

The first valve 44 and the second valve 45 are operated as required, respectively to increase the pressure in the chamber 20 or to create a vacuum pressure therein.

In detail, the first valve 44, in open position, allows the air to flow into pressure line 42 reaching the chamber 20. In this condition the second valve 45 remains closed.

Instead, when the second valve 45 is open the air flows through the Venturi duct of the vacuum gauge 47 and generates a vacuum pressure in the chamber 20 through the suction inlet of said vacuum gauge. In this operating condition, the first valve 44 is instead closed.

To protect the pressure gauge 46 and the vacuum pressure gauge 48, preferably the pneumatic circuit 40 is provided with a third distributor valve 49 and with a fourth distributor valve 50, respectively placed on the pressure line 42 downstream of the pressure gauge 46 and on the vacuum line 43 downstream of the vacuum pressure gauge 48.

The task of the third valve 49 is to isolate the pressure gauge 46 from the chamber 20 when a vacuum pressure is created in the chamber 20, while the task of the fourth valve 50 is to isolate the vacuum pressure gauge 48 from the chamber 20 when the chamber 20 is pressurized.

Preferably, the pneumatic circuit 40 is also equipped with a pressure relief valve 52, preferably adjustable, connected on the pressure line upstream of the first valve 45.

The chamber 20, through the opening 44, is preferably connected to a further discharge valve 53 that allows the passage of air from the chamber 20 toward the outside or vice versa, to return the chamber 20 to atmospheric pressure before the cover 25 is opened.

Preferably, the pneumatic circuit 40 further comprises a safety valve 54 to limit the maximum pressure inside the chamber 20.

According to the invention, the distributor valves 45, 46, 49, 50, and optionally also the discharge valve 53, are preferably controlled electrically.

Control of said valves is entrusted to a control unit 60 provided with a touchscreen 61 or, alternatively, with mechanical or electronic push buttons.

Said control unit 60, besides controlling the valves, also manages activation of the LEDs 35.

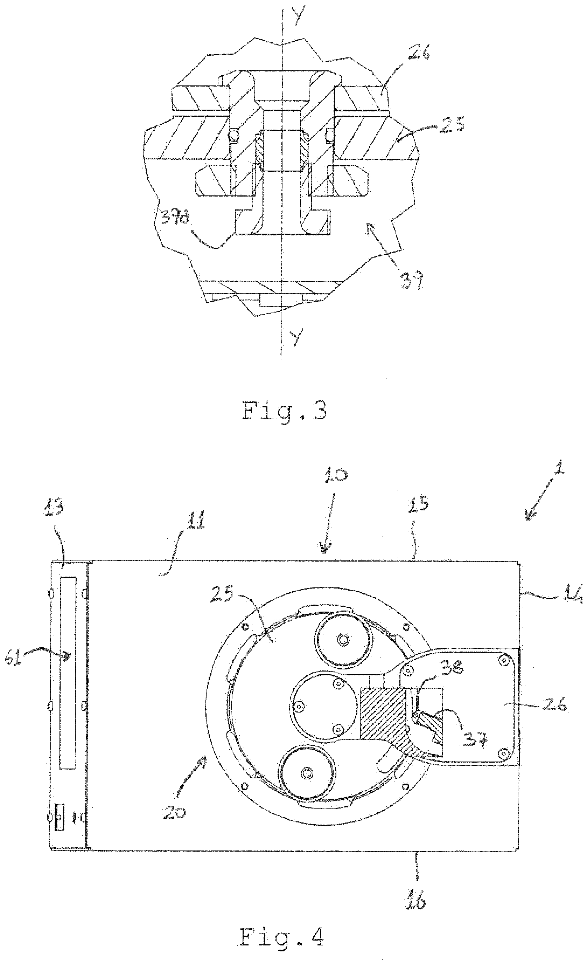

Advantageously, the support 26 of the cover 25 is equipped with a microswitch 37 connected to the control unit 60 (Fig. 4). Said microswitch 37 co-acts with an activation element 38, which rotates integral with the cover 25, adapted to activate said microswitch 37 when the cover is rotated in a completely closed position.

According to a preferred variant, the cover 25 can also be equipped with a safety lock system 39, interposed between said cover 25 and the support 26 (Fig. 3). Said safety lock 39 comprises a moving part 39a that moves between a free position, in which it allows the cover to rotate with respect to the support 26, and a locked position, in which said elements are mutually locked.

When a pressure above a certain threshold, typically around 0.5 bar, is present in the chamber 20, the moving part 39a is thrust by the pressure into the locked position.

The safety lock 39 thus prevents the cover 25 from being rotated, and consequently opened, if there is overpressure inside the chamber 20.

The apparatus described above can be employed for polymerizing or cross-linking a dental composition with a method according to the present invention.

The steps of the method described below are performed starting from a condition in which a product P is positioned on the supporting plate 32 and the cover 25 is correctly closed.

A first step of the method provides for pressurizing the chamber 20. The pressure is preferably comprised between 1 bar and 6 bar and more preferably between 2 bar and 3 bar. The pressure is applied for a time typically comprised between 20 seconds and 60 minutes as a function of the dimensions of the product P to be treated and of the materials included in the dental composition.

The pressure is applied for a time preferably comprised between 5 min and 20 min.

To allow air to be introduced into the chamber 20, the first valve 45 and the third valve 49 are opened by means of a command sent by the control unit 60.

As already mentioned, this step allows compacting of the material of the prosthesis before curing, promoting the elimination of air bubbles both internally and in proximity to the surface, making this latter smoother and more uniform.

A subsequent step provides for reducing the air pressure inside the chamber 20. More in detail, the pressure is reduced to a value below the atmospheric value, thus creating a vacuum pressure.

The value of vacuum pressure is at least -0.50 bar and more preferably at least -0.80 bar. In general, the vacuum pressure is not below -0.9 bar.

The vacuum pressure is preferably maintained for a time comprised between 30 seconds and 30 minutes and more preferably between 1 minute and 5 minutes.

This vacuum pressure is created following opening of the second valve 45, which allows the flow of compressed air into the vacuum gauge 47, and of the fourth valve 50, which allows said vacuum gauge 47 to be in communication with the chamber 20 and enable suction of the air.

The opening command of the aforesaid valves is given by the control unit 60.

A subsequent step provides for switching on the LEDs 35 to trigger the polymerizing or cross-linking process of the photosensitive polymer inside the dental composition.

Preferably, the vacuum pressure in the chamber 20 is maintained during this step.

As mentioned above, the value of current supplied to the LEDs 35 is regulated as a function of the dimensions of the piece, by the complexity of the shape, by the thicknesses of the material to be treated and by the type of polymer in the dental composition.

The time for which the LEDs 35 remains on is preferably comprised between 5 seconds and 20 minutes and more preferably between 5 seconds and 5 minutes. However, for the majority of materials employed the irradiation time varies between 1 minute and 5 minutes.

According to a variant of the invention, the method also comprises a step of heating the chamber 20. This heating is preferably performed before applying pressure and is maintained for the whole of the process. As mentioned above, if the method provides for application of the vacuum pressure before step (a), heating can also take place before and even during application of this vacuum pressure.

Typically, the aforesaid heating step, before applying pressure or before the initial vacuum pressure, takes place for a time comprised between 5 minutes and 30 minutes. This heating step is carried out with the prosthesis already positioned in the chamber 20.

The heating temperature of the chamber 20 is preferably comprised between 45 °C and 65 °C and more preferably between 50 °C and 60 °C.

In the variant in which the apparatus is provided with a control unit 60, preferably this unit controls the valves, the LEDs 35 and the resistor means. In particular, the control unit 60 can be programmed to control all the steps of the process in sequence. The parameters of the various steps (times, pressures, temperatures, currents, etc.) can be entered directly by an operator or, alternatively, the control unit 60 can comprise preset programs selectable by the operator.

The control unit 60 can be configured to operate in manual mode, in which the operator can manually control activation and deactivation of the various components.

If the apparatus is provided with manual electric controls, such as push buttons or dials or the like, the various steps of the method are managed manually by the operator.

The invention has been described for illustrative and non-limiting purposes according to some preferred embodiments thereof.

## Claims

1. An apparatus for polymerizing or cross-linking a dental composition that includes a photosensitive material, comprising:
- a chamber (20) for housing a product (P) produced with the aforesaid dental composition, said chamber being sealable with a cover (25);
- a light source (35) configured to emit a light radiation with a wavelength comprised between 350 nm and 600 nm;
- a pneumatic circuit (40) in fluid communication with the chamber (20), said pneumatic circuit (40) being configured to apply an overpressure or a vacuum pressure in the chamber (20), said pneumatic circuit (40) comprising at least a pressure line (42) and a vacuum line (43) connectable to a compressed air source, said pressure line (42) being configured to introduce pressurized air into the chamber (20), said vacuum line (43) comprising a Venturi vacuum gauge (47) in communication with the chamber (20) to create a vacuum pressure therein, said pneumatic circuit (40) comprising at least a valve (45, 49) on the pressure line (42) and at least a valve (46, 50) on the vacuum line (43), said valves being opened selectively to apply a pressure or a vacuum in the chamber (20) and optionally
- a compressor;
wherein the light source (35) is housed in the chamber (20)

2. The apparatus according to claim 1, wherein said valves (45, 46, 49, 50) are controllable electrically.

3. The apparatus according to claim 1 or 2, comprising resistor means adapted to heat the chamber (20).

4. The apparatus according to claims 1 to 3, also comprising a control unit (60) connected to said valves (45, 46, 49, 50), to the light source (35) and to the resistor means, said control unit (60) being adapted to automatically perform an activation or deactivation sequence of the aforesaid components.

5. A method for polymerizing or cross-linking a dental composition that includes a photosensitive material, wherein the method is perfomed by using an apparatus according to claims 1 to 4, wherein at least the following steps are comprised: one product (P) produced with the aforesaid dental composition is placed in a sealed chamber (20), the method comprising at least:
- a step (a) consisting of subjecting a product (P) produced with the said dental composition to a pressure comprised between 1 bar and 6 bar, the outer surface of the product being subjected to the hydrostatic pressure exerted by a gaseous fluid that surrounds the product in the chamber (20); and
- a subsequent step (b) consisting of subjecting the product (P) to a vacuum pressure, said step being performed by taking the pressure inside the chamber (20) to a value of at least -0.5 bar;
- a step (c) consisting of irradiating the product (P) with a light source (35), adapted to trigger or to promote polymerization/cross-linking of the photosensitive material within the dental composition;
wherein said step (c) follows said step (b).

6. The method according to claim 5, wherein said step (a) has a duration comprised between 20 seconds and 60 minutes.

7. The method according to claim 5 or 6, wherein the step (b), is carried out for a time comprised between 30 seconds and 30 minutes.

8. The method according to claim 7 wherein:
- in the step (a) the product (P) is subjected to a pressure comprised between 1 bar and 6 bar for a time comprised between 5 minutes and 20 minutes;
- in the step (b) the product (P) is subjected to a vacuum pressure comprised between -0.8 bar and -0.9 bar for a time comprised between 1 minute and 5 minutes; and
- in the step (c) the vacuum pressure is maintained and the product (P) is irradiated with a light radiation with a wavelength comprised between 350 nm and 600 nm for a time comprised between 5 seconds and 5 minutes.

9. The method according to any one of the preceding claims 5 to 8, providing a further step of heating the product (P) at least before step (a), and optionally for the whole of the process, to a temperature comprised between 45 °C and 65 °C.

## Patentansprüche

1. Ein Apparat zum Polymerisieren oder Vernetzen einer Dentalzusammensetzung, die ein lichtempfindliches Material enthält, umfassend:
- eine Kammer (20) zur Aufnahme eines Produkts (P), das mit der besagten Dentalzusammensetzung hergestellt wurde, wobei die besagte Kammer mit einem Verschluss (25) abdichtbar ist;
- eine Lichtquelle (35), die so konfiguriert ist, dass sie eine Lichtstrahlung mit einer Wellenlänge zwischen 350 nm und 600 nm abgibt;
- einen pneumatischen Kreislauf (40) in Fluidkommunikation mit der Kammer (20), wobei der besagte pneumatische Kreislauf (40) so konfiguriert ist, dass er einen Überdruck oder einen Vakuumdruck in der Kammer (20) einsetzt, wobei der besagte pneumatische Kreislauf (40) mindestens eine Druckleitung (42) und eine Vakuumleitung (43) umfasst, die mit einer Druckluftquelle verbunden werden können, wobei die besagte Druckleitung (42) so konfiguriert ist, dass sie Druckluft in die Kammer (20) einleitet, und die besagte Vakuumleitung (43) ein Venturi-Vakuummessgerät (47) umfasst, das mit der Kammer (20) in Verbindung steht, um darin einen Vakuumdruck zu erzeugen, wobei der besagte pneumatische Kreislauf (40) mindestens ein Ventil (45, 49) an der Druckleitung (42) und mindestens ein Ventil (46, 50) an der Vakuumleitung (43) umfasst, wobei die besagten Ventile selektiv geöffnet werden, um einen Druck oder ein Vakuum in der Kammer (20) einzusetzen, sowie wahlweise
- einen Kompressor;
worin, dass die Lichtquelle (35) in der Kammer (20) untergebracht ist.

2. Der Apparat gemäß Anspruch 1, wobei die besagten Ventile (45, 46, 49, 50) elektrisch steuerbar sind.

3. Der Apparat gemäß Anspruch 1 oder 2, mit Widerstandsmitteln, die zur Beheizung der Kammer (20) geeignet sind.

4. Der Apparat gemäß den Ansprüchen 1 bis 3, auch eine Steuereinheit (60) umfassend, die mit den besagten Ventilen (45, 46, 49, 50), mit der Lichtquelle (35) und mit den Widerstandsmitteln verbunden ist, wobei die besagte Steuereinheit (60) geeignet ist, automatisch eine Aktivierungs- oder Deaktivierungssequenz der besagten Komponenten durchzuführen.

5. Ein Verfahren zum Polymerisieren oder Vernetzen einer Dentalzusammensetzung, die ein lichtempfindliches Material enthält, wobei das Verfahren unter Verwendung eines Apparates gemäß den Ansprüchen 1 bis 4 durchgeführt wird, wobei mindestens die folgenden Stufen umfasst sind: ein Produkt (P), das mit der besagten Dentalzusammensetzung hergestellt wurde, wird in eine abgedichtete Kammer (20) eingebracht, wobei das Verfahren mindestens umfasst:
- eine Stufe (a), die darin besteht, ein mit der besagten Dentalzusammensetzung hergestelltes Produkt (P) einem Druck zwischen 1 bar und 6 bar auszusetzen, wobei die Außenfläche des Produkts dem hydrostatischen Druck ausgesetzt wird, der von einem gasförmigen Medium ausgeübt wird, das das Produkt in der Kammer (20) umgibt; sowie
- eine anschließende Stufe (b), die darin besteht, das Produkt (P) einem Vakuumdruck auszusetzen, wobei die besagte Stufe durchgeführt wird, indem der Druck im Inneren der Kammer (20) auf einen Wert von mindestens -0,5 bar gebracht wird;
- eine Stufe (c), die darin besteht, das Produkt (P) mit einer Lichtquelle (35) zu bestrahlen, die geeignet ist, die Polymerisation/Vernetzung des lichtempfindlichen Materials innerhalb der Dentalzusammensetzung einzustellen oder zu fördern;
wobei die besagte Stufe (c) der besagten Stufe (b) folgt.

6. Ein Verfahren gemäß Anspruch 5, wobei die besagte Stufe (a) eine Dauer zwischen 20 Sekunden und 60 Minuten hat.

7. Das Verfahren gemäß Anspruch 5 oder 6, wobei die Stufe (b) für eine Zeit zwischen 30 Sekunden und 30 Minuten durchgeführt wird.

8. Das Verfahren gemäß Anspruch 7, wobei:
- in der Stufe (a) das Produkt (P) einem Druck zwischen 1 bar und 6 bar für eine Zeit zwischen 5 Minuten und 20 Minuten ausgesetzt wird;
- in der Stufe (b) das Produkt (P) einem Vakuumdruck zwischen -0,8 bar und -0,9 bar für eine Zeit zwischen 1 Minute und 5 Minuten ausgesetzt wird; sowie
- in der Stufe (c) der Vakuumdruck aufrechterhalten und das Produkt (P) mit einer Lichtstrahlung mit einer Wellenlänge zwischen 350 nm und 600 nm für eine Zeit zwischen 5 Sekunden und 5 Minuten bestrahlt wird.

9. Das Verfahren gemäß einem der vorhergehenden Ansprüche 5 bis 8, das eine weitere Stufe des Erhitzens des Produkts (P) mindestens vor Stufe (a) und wahlweise während des gesamten Prozesses auf eine Temperatur zwischen 45 °C und 65 °C vorsieht.

## Revendications

1. Appareil pour polymériser ou réticuler une composition dentaire qui inclut un matériau photosensible, comprenant :
- une chambre (20) pour loger un produit (P) fabriqué avec la composition dentaire susmentionnée, ladite chambre pouvant être scellée avec un couvercle (25) ;
- une source lumineuse (35) logée dans la chambre (20) et configurée pour émettre un rayonnement lumineux d'une longueur d'onde comprise entre 350 nm et 600 nm ;
- un circuit pneumatique (40) en communication fluidique avec la chambre (20), ledit circuit pneumatique (40) étant configuré pour appliquer une surpression ou une dépression dans la chambre (20), ledit circuit pneumatique (40) comprenant au moins une ligne de pression (42) et une ligne de dépression (43) pouvant être connectées à une source d'air comprimé, ladite ligne de pression (42) étant configurée pour introduire de l'air sous pression dans la chambre (20), ladite conduite de vide (43) comprenant un vacuomètre à venturi (47) en communication avec la chambre (20) pour y créer une pression de vide, ledit circuit pneumatique (40) comprenant au moins une vanne (45, 49) sur la conduite de pression (42) et au moins une vanne (46, 50) sur la conduite de vide (43), lesdites vannes étant ouvertes sélectivement pour appliquer une pression ou un vide dans la chambre (20) et éventuellement
- un compresseur ;
où par le que la source lumineuse (35) est logée dans la chambre (20).

2. Appareil selon la revendication 11, où lesdites vannes (45, 46, 49, 50) sont contrôlables électriquement.

3. Appareil selon l'une des revendications 1 ou 2, comprenant des moyens à résistance adaptés pour chauffer la chambre (20).

4. Appareil selon les revendications 1 à 3, comprenant également une unité de commande (60) connectée auxdites vannes (45, 46, 49, 50), à la source lumineuse (35) et aux moyens à résistance, ladite unité de commande (60) étant adaptée pour effectuer automatiquement une séquence d'activation ou de désactivation des composants susmentionnés.

5. Procédé de polymérisation ou de réticulation d'une composition dentaire qui comprend un matériau photosensible, où le procédé est réalisé en utilisant un appareil selon les revendications 1 à 4, où au moins les étapes suivantes sont comprises : un produit (P) fabriqué avec la composition dentaire susmentionnée est placé dans une chambre étanche (20), le procédé comprenant au moins :
- une étape (a) consistant à soumettre un produit (P) fabriqué avec ladite composition dentaire à une pression comprise entre 1 bar et 6 bar, la surface extérieure du produit étant soumise à la pression hydrostatique exercée par un fluide gazeux qui entoure le produit dans la chambre (20) ; et
- une étape ultérieure (b) consistant à soumettre le produit (P) à une pression de vide, ladite étape étant réalisée en portant la pression à l'intérieur de la chambre (20) à une valeur d'au moins -0,5 bar ;
- une étape (c) consistant à irradier le produit (P) avec une source lumineuse (35), adaptée pour déclencher ou favoriser la polymérisation/réticulation du matériau photosensible au sein de la composition dentaire ;
où ladite étape (c) suit ladite étape (b).

6. Procédé selon la revendication 5, où ladite étape (a) a une durée comprise entre 20 secondes et 60 minutes.

7. Procédé selon la revendication 5 ou 6, où l'étape (b) est effectuée pendant une durée comprise entre 30 secondes et 30 minutes.

8. Procédé selon la revendication 7, où :
- à l'étape (a), le produit (P) est soumis à une pression comprise entre 1 bar et 6 bar pendant une durée comprise entre 5 minutes et 20 minutes ;
- à l'étape (b), le produit (P) est soumis à une pression de vide comprise entre -0,8 bar et -0,9 bar pendant une durée comprise entre 1 minute et 5 minutes ; et
- à l'étape (c), la pression de vide est maintenue et le produit (P) est irradié avec un rayonnement lumineux d'une longueur d'onde comprise entre 350 nm et 600 nm pendant une durée comprise entre 5 secondes et 5 minutes.

9. Procédé selon l'une des revendications 5 à 8 précédentes, prévoyant une étape supplémentaire de chauffage du produit (P) au moins avant l'étape (a), et en option pendant l'intégralité du processus, à une température comprise entre 45 °C et 65 °C.
